Europäisches Patentamt

European Patent Office

Office européen des brevets

(19)

(11) Numéro de publication: **0 360 350**
**A1**

(12)

# DEMANDE DE BREVET EUROPEEN

(21) Numéro de dépôt: 89202357.3

(22) Date de dépôt: 18.09.89

(51) Int. Cl.5: **F16C 32/00 , F16C 17/12**

(30) Priorité: 20.09.88 FR 8812251

(43) Date de publication de la demande:
28.03.90 Bulletin 90/13

(84) Etats contractants désignés:
DE FR GB IT

(71) Demandeur: **ABG SEMCA S.A.**
**408, avenue des Etats-Unis**
**F-31016 Toulouse Cédex(FR)**

(72) Inventeur: **Riazuelo, Serge**
**Rue Soubie**
**F-31140 Montberon(FR)**
Inventeur: **Jambou, André**
**5 allée du Charolais**
**F-31140 Castelginest(FR)**
Inventeur: **Thomas, François**
**76 boulevard de l'Embouchure**
**F-31200 Toulouse(FR)**
Inventeur: **Malabre, Christian**
**Chemin de la Riverot**
**F-31120 Labarthe sur Leze(FR)**

(74) Mandataire: **Barre, Philippe**
**Cabinet Barre-Gatti-Laforgue 95 rue des**
**Amidonniers**
**F-31069 Toulouse Cédex(FR)**

(54) Palier à film fluide et son procédé de réalisation.

(57) L'invention se rapporte à un palier à film fluide et à son procédé de réalisation.

L'invention concerne un palier à film fluide hydrodynamique formé entre une pluralité de feuilles (3) solidaire d'un fourreau (5) et un arbre (6) en rotation par rapport audit fourreau. L'invention a pour but de totalement dissocier le réglage de la raideur radiale du palier dans la phase de démarrage et celle dans la phase de rotation à vitesse de travail.

Une raideur faible, négligeable ou nulle des feuilles (3), permet de limiter les forces d'application des feuilles sur l'arbre et ainsi de diminuer l'usure au démarrage du palier. Après le démarrage, la mise en rotation de l'arbre (6) à l'intérieur de la feuille (3) provoque un déplacement des feuilles (3) qui s'écartent de l'arbre (6) par interposition d'un film d'air hydrodynamique. La nouvelle position occupée par les feuilles (3) entraîne une reprise de l'effort des feuilles (3) par des éléments de contrainte (4), comme par exemple des ressorts à lames (40, 41, 42 ou 43).

L'invention s'applique notamment à toutes les applications classiques de paliers à film fluide de type connu, comme par exemple les moteurs ou les machines tournantes équipant les aéronefs.

L'invention s'applique d'autre part à la réalisation de paliers susceptibles de tourner à basse vitesse, et/ou susceptibles de supporter des charges élevées.

FIG. 5

## PALIER A FILM FLUIDE ET SON PROCEDE DE REALISATION

L'invention se rapporte principalement à un palier à film fluide et à son procédé de réalisation.

IL est connu de réaliser le palier comportant un arbre susceptible de tourner par rapport à un fourreau. A l'arrêt, une pluralité de feuilles est appliquée sur l'arbre formant des coins contenant un fluide, par exemple de l'air. La rotation de l'arbre par rapport aux feuilles provoque la compression du coin de fluide créant un champ de pression. Il en résulte la formation d'un film de fluide entre les feuilles et l'arbre. Une fois le film de fluide formé, le palier présente un très faible couple résistant et pas d'usure des feuilles.

Pour le bon fonctionnement du palier, il est impératif que le film de fluide entre les feuilles et l'arbre ne soit jamais détruit, notamment par le balourd du palier, par le poids de l'arbre, par les vibrations, par l'accélération et par les efforts gyroscopiques résultant de la rotation de l'arbre ou du fourreau et du déplacement du palier, par exemple monté sur un aéronef.

Dans les paliers de type connu, la stabilité du film de fluide est obtenue par une raideur radiale de feuilles qui comprime le film de fluide.

Ce type de réalisation présente un nombre d'inconvénients.

L'effort d'application de feuilles sur l'arbre augmente le couple résistant du palier au démarrage.

Pour atténuer ces inconvénients, il est connu de recouvrir les feuilles d'une couche solide limitant le coefficient de frottement entre les feuilles et l'arbre.

Malgré cela, le couple important au démarrage provoque :
- une usure importante de feuilles,
- une consommation d'énergie au démarrage,
- un échauffement au démarrage risquant de détériorer les couches de lubrification,
- un démarrage du palier à vitesse plus élevée.

De plus, la raideur radiale des feuilles ne permet pas un fonctionnement à des basses vitesses du palier, car le film d'air ne se forme que pour les vitesses importantes.

Dans un palier selon la présente invention on optimise la raideur radiale des feuilles, et notamment à basses vitesses. L'optimisation de raideur radiale des feuilles est permise par, s'il s'avère nécessaire, la présence d'éléments de contrainte extérieurs permettant de maintenir une raideur radiale du palier lorsque les feuilles sont écartées de l'arbre par la formation du film de fluide.

Dans une première variante de réalisation du dispositif selon la présente invention, les feuilles ne subissent aucune contrainte au démarrage, leur écartement maximal sous l'action du film de fluide est limité par des butées du fourreau. Ce type de réalisation permet une construction très simple et une très faible usure au démarrage du palier. Il présente l'inconvénient d'une très faible stabilité à vitesse de travail et d'une faible capacité de charge.

Dans une deuxième variante de réalisation du dispositif selon la présente invention, les moyens de contraintes, comme par exemple des ressorts, maintiennent la raideur radiale à grande vitesse, après écartement des feuilles de l'arbre. Les moyens de contrainte ne commencent à agir qu'après la phase de démarrage, par exemple par suite de la portée limitée de force, par leur géométrie ou par la présence des butées limitant la course des ressorts.

Cette variante de réalisation est particulièrement avantageuse dans la mesure où elle présente tous les avantages de paliers de type connu avec en plus :
- la limitation de l'usure aux démarrages,
- la diminution de l'énergie nécessaire pour la mise en rotation du palier,
- la limitation de l'échauffement des feuilles qui permet de préserver le film de revêtement limitant le coefficient de frottement aux démarrages,
- de diminuer la durée de la phase de démarrage ou de nécessiter des moteurs d'entraînement de plus faible puissance,
- d'étendre vers le bas la gamme des vitesses utilisables du palier par la formation plus tôt du film d'air.

Une troisième variante de réalisation du palier selon la présente invention, la rigidité totale radiale du palier se répartit entre les feuilles et les éléments de contrainte. La dissociation de la raideur radiale à faible et à grande vitesse permet toutes les optimisations comme par exemple de permettre à l'arbre de former un angle non nul avec le fourreau si cela est nécessaire.

L'invention a principalement pour objet un palier permettant la rotation relative d'un arbre et d'un fourreau comportant une pluralité de feuilles susceptibles d'engendrer un film fluide autour de l'arbre, caractérisé par le fait qu'une fixation libre des feuilles permet leur mouvement pratiquement sans contrainte par rapport à l'arbre.

L'invention a aussi pour objet un palier, caractérisé par le fait qu'il comporte des moyens de contrainte exerçant une force dirigée vers l'arbre sur les feuilles.

L'invention a aussi pour objet un palier permettant la rotation relative d'un arbre et d'un fourreau comportant une pluralité de feuilles susceptibles d'engendrer un film fluide autour de l'arbre, caractérisé par le fait qu'il comporte des moyens de contrainte participant à la rigidité du palier en exerçant des forces sur les feuilles dirigées vers l'arbre, les feuilles participant à la rigidité du palier par une force de rappel élastique dirigée vers l'arbre.

L'invention a aussi pour objet un palier, caractérisé par le fait qu'il comporte des éléments de transmission de force des moyens de contrainte aux feuilles.

L'invention a aussi pour objet un palier, caractérisé par le fait que les éléments de transmission de force ont une forme de révolution.

L'invention a aussi pour objet un palier, caractérisé par le fait que les moyens de contrainte sont des ressorts.

L'invention a aussi pour objet un palier caractérisé par le fait que les ressorts sont des ressorts à lames.

L'invention a aussi pour objet un palier, caractérisé par le fait qu'une première extrémité de chaque lame du ressort est solidarisée avec le fourreau et qu'une seconde extrémité de chaque lame du ressort exerce une force dirigée vers l'arbre, sur une feuille.

L'invention a aussi pour objet un palier, caractérisé par le fait que chaque lame des ressorts prend appui, à ses extrémités, sur le fourreau et exerce une force dirigée vers l'arbre, sur les feuilles, sensiblement au milieu de chaque lame.

L'invention a aussi pour objet un palier caractérisé par le fait que le ressort a une force polygonale.

L'invention a aussi pour objet un palier, caractérisé par le fait que le nombre de côtés du polygone formé par la lame du ressort est égale au nombre de feuilles du palier et que chaque côté de la lame du ressort exerce une force dirigée vers l'arbre sur les feuilles sensiblement au milieu de chaque côté.

L'invention a aussi pour objet un palier caractérisé par le fait que les feuilles entourent les éléments de transmission de force.

L'invention a aussi pour objet un palier, caractérisé par le fait que les feuilles fixées par une de leurs extrémités au fourreau ont un fourreau support solidaire du fourreau et à une pièce de transmission de force.

L'invention a aussi pour objet un palier, caractérisé par le fait que chaque feuille est solidarisée à une de ses extrémités avec le fourreau au niveau de l'extrémité de la lame ressort.

L'invention a aussi pour objet un palier, caractérisé par le fait que la force exercée par les moyens de contrainte est plus faible en module que la force de rappel des feuilles de façon à permettre à l'axe de l'arbre de former un angle non nul avec l'axe du fourreau.

L'invention a aussi pour objet un palier, caractérisé par le fait que la lame du ressort forme une chambre contenant un fluide compressible, le fluide jouant le rôle d'amortisseur lors des déplacements de la lame.

L'invention a aussi pour objet un palier, caractérisé par le fait que le même fluide forme un film autour de l'arbre et permet l'amortissement des mouvements des lames de ressorts.

L'invention a aussi pour objet un procédé de fabrication de palier à film fluide, caractérisé par le fait qu'il comporte les étapes suivantes : - fixation libre des feuilles,
- tarage des moyens de contraintes d'après la capacité de charge désirée.

L'invention sera mieux comprise au moyen de la description ci-après et des figures annexées, données comme des exemples non limitatifs, parmi lesquelles :

- la figure 1 est une coupe illustrant le principe des fonctionnements du palier selon la présente invention ;

- la figure 2 est une coupe d'un premier exemple de réalisation du dispositif selon la présente invention ;

- la figure 3 - est une coupe d'un deuxième exemple de réalisation du palier selon la présente invention ;

- la figure 4 est une coupe d'un troisième exemple de réalisation d'un palier selon la présente invention ;

- la figure 5 est une coupe d'un quatrième exemple de réalisation d'un palier selon la présente invention ;

- la figure 6 est une vue en perspective illustrant les possibilités de fonctionnement d'un cinquième exemple de réalisation d'un palier selon la présente invention.

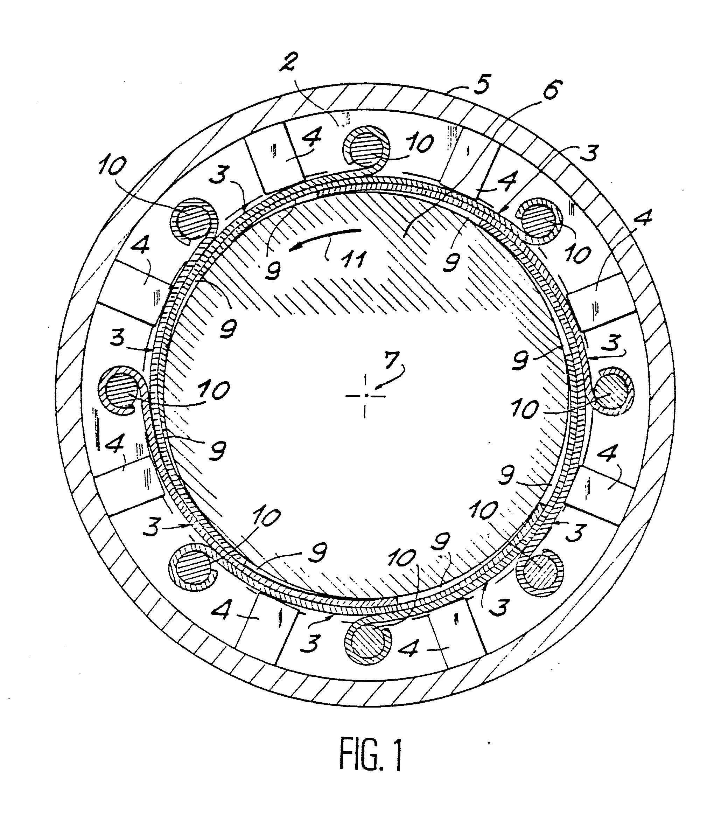

Sur les figures 1 à 6, on a utilisé les mêmes références pour désigner les mêmes éléments.

Sur la figure 1, on peut voir un exemple de réalisation d'un palier selon la présente invention. Ce palier comporte un arbre 6 cylindrique d'axe 7. Autour de l'arbre est disposé une pluralité de feuilles 3, avantageusement métalliques. Dans les exemples non limitatifs illustrés sur les figures, le palier comporte huit feuilles 3. En se recouvrant, deux feuilles successives forment un coin 9 rempli par le fluide ambiant, comme par exemple l'air, la pression atmosphérique, ou en gaz comprimé. Les feuilles 3 sont fixées par des éléments de fixation 10. Par exemple, comme illustré sur la figure 1, chaque extrémité des feuilles 3 est enroulée autour d'un cylindre de fixation 10. La rotation des feuilles 3 autour d'un cylindre 10 est libre, ou quasi libre. Une force de rappel très faible assure avant le démarrage un contact entre les feuilles 3 et l'arbre 6, avec un couple résistant négligeable.

Le palier comporte un fourreau extérieur 5 par rapport auquel tourne l'arbre 6.

Le palier, selon la présente invention, comporte avantageusement une pluralité de moyens de contrainte 4, par exemple fixés au fourreau 5.

Les feuilles 3 sont recouvertes d'un film solide diminuant le coefficient de frottement entre les feuilles 3 et l'arbre 6. Le film est par exemple constitué du PTFE.

Lors de la mise en rotation de l'arbre 6, la direction indiquée par la flèche 11, la vitesse du fluide augmente au fur et à mesure que l'arbre 6 prend de a vitesse. La variation des vitesses du fluide provoque une surpression qui tend à faire s'écarter les feuilles 3 de l'arbre 6. Dans la mesure où les forces qui à ce moment là s'opposent à l'écartement des feuilles 3 de l'arbre 6 sont faibles ou négligeables, il se forme même pour des vitesses de rotation faibles de l'arbre 6 un film de fluide. A partir de ce moment, il n'y a plus de contact entre la feuille 3 et l'arbre 6 évitant ainsi toute usure et diminuant considérablement le frottement. Lorsque la vitesse de rotation de l'arbre 6 augmente, les feuilles 3 supportent un effort de plus en plus important. Pour maintenir le film de fluide comprimé, il est nécessaire d'empêcher les feuilles 3 de trop s'écarter de l'arbre 6. Les moyens de contrainte 4 agissent sur les feuilles 3 écartées de l'arbre 6 ; les moyens de contrainte 4 n'ayant qu'une action très faible ou nulle sur la feuille 3 lorsqu'elles sont en contact de l'arbre 6.

Avantageusement, on dispose d'un moyen de contrainte 4 sur les feuilles 3, par exemple huit, dans les exemples illustrés sur les figures.

Dans une variante de réalisation du palier 6 dans la présente invention, les moyens de contrainte 4 sont des butées limitant la course des lames 3. Cette variante de réalisation présente l'avantage d'une construction extrêmement simple mais ne présente pas contre qu'une très faible capacité des charges.

Dans une seconde variante de réalisation du palier selon la présente invention, les moyens de contrainte 4 comportent des ressorts. Par exemple, on utilise des ressorts à boudins disposés par exemple entre le fourreau 5 et les points des feuilles 3 disposés sensiblement à distance égale de deux points d'accrochage 10.

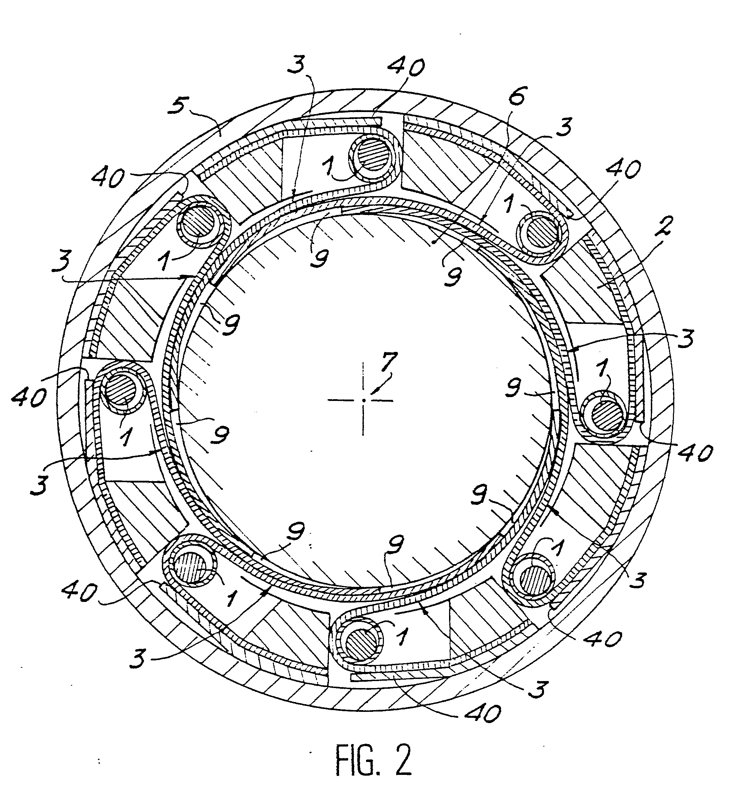

On peut bien entendu utiliser d'autres types de ressorts. Quelques exemples de dispositions de ressorts à lames sont illustrés sur les figures 2 à 5.

Sur la figure 2, on peut voir un exemple de réalisation de palier selon la présente invention comportant un ressort à lames 40. Dans l'exemple de réalisation de la figure 2, une des extrémités d'un ressort à lames 40 est solidarisée avec le fourreau 5. L'autre extrémité appuit sur une pièce de transmission d'un mouvement 1 qui elle-même appuit sur les feuilles 3. Quand les feuilles 3 sont en contact avec l'arbre 6, le ressort 40 ne touche pas encore les pièces de transmission de mouvement 1. Par contre en s'écartant, la lame 3 vient s'appuyer, par exemple par l'intermédiaire des pièces 1, sur les lames de ressort 40. Ainsi, à partir de ce moment là, on augmente très fortement la rigidité du palier sans pour autant avoir gêner le démarrage. Avantageusement, les éléments de transmission de force 1 sont des pièces de révolution, ce qui permet leur usinage au tour, par exemple des cylindres. L'usinage au tour permet de rectifier avec précision les éléments de transmission de force 1 pour obtenir la tolérance de fabrication nécessaire au fonctionnement du palier. Dans la variante de réalisation représentée sur la figure 2, la lame 3 passe autour des éléments de transmission de force 1 pour être solidarisée avec le fourreau 5. Avantageusement cette solidarisation se fait au niveau de la solidarisation d'une des extrémités des ressorts à lames 40. Ainsi, on fournit une force, faible, mais suffisante pour plaquer les feuilles 3 contre l'arbre 6 en l'absence de mouvement de rotation. Cette force faible est obtenue par le choix des matériaux et des longueurs des feuilles 3 ayant par exemple une forme en épingle à cheveux. Le fait de plaquer, même faiblement, les feuilles 3 contre l'arbre 6 peut être nécessaire pour la formation du coin 9 nécessaire à la formation du film fluide entre l'arbre 6 et les feuilles 3. Selon la présente invention, dans les paliers destinés à remplacer les paliers classiques, les forces élastiques fournies par les ressorts à lames 40 seront nettement supérieures aux forces élastiques plaquant les feuilles 3 contre l'arbre 6.

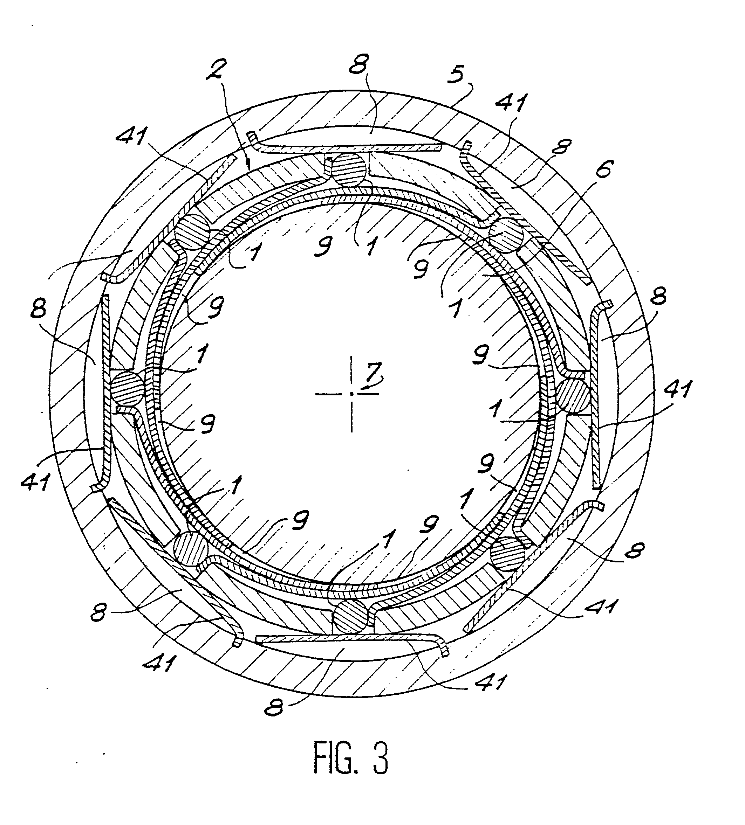

Sur la figure 3, on peut voir un exemple de réalisation de palier, selon la présente invention, comportant un fourreau support 2 intérieur au fourreau 5. Le fourreau support 2 permet le maintien en place des pièces 1 de transmission de force entre les feuilles 3 et des ressorts à lames 41 prenant appui par leur extrémité sur le fourreau 5. Dans l'exemple illustré sur la figure 3, une des extrémités de chaque ressort à lames 41 est rendue solidaire du fourreau 5. Cette extrémité pénètre par exemple dans la paroi interne du fourreau 5. Dans l'exemple de réalisation illustré sur la figure 3, les feuilles 3 ont sensiblement une forme en arc de cercle. L'arc de cercle est prolongé à une des extrémités par une partie plane qui est par exemple fixée entre les éléments 1 de transmission de force et le support fourreau 2.

Le ressort à lames 41 appuit sur la pièce de transmission de force 41. Toutefois, une pré-charge est donnée au ressort 41 par le fourreau support 2 qui limite la course du ressort 41 en direction de l'axe 7 de l'arbre 6. Lorsque les feuilles 3, sous l'action d'une rotation de l'arbre 6 par rapport au fourreau 5, s'écartent de l'arbre 2, elles prennent appui sur les éléments de transmission 1 qui eux-mêmes s'appuient sur les ressorts à lames 41. Les ressorts à lames 41 s'opposent à un écartement très important de feuilles 3. Ils assurent la rigidité radiale du palier selon la présente invention.

Avantageusement, les ressorts à lames 41 forment des chambres 8 remplies d'un fluide. Le fluide est par exemple de l'air sous pression atmosphérique, de l'air à haute pression, du gaz carbonique ou de l'azote. Avantageusement, le fluide enfermé par la chambre 8 est le même que celui qui règne dans l'ensemble de l'enceinte du palier selon l'invention. Le fluide 8 est comprimé quand les feuilles 3 appuient sur les ressorts 41. Ainsi, il constitue un amortisseur permettant d'absorber par exemple les vibrations.

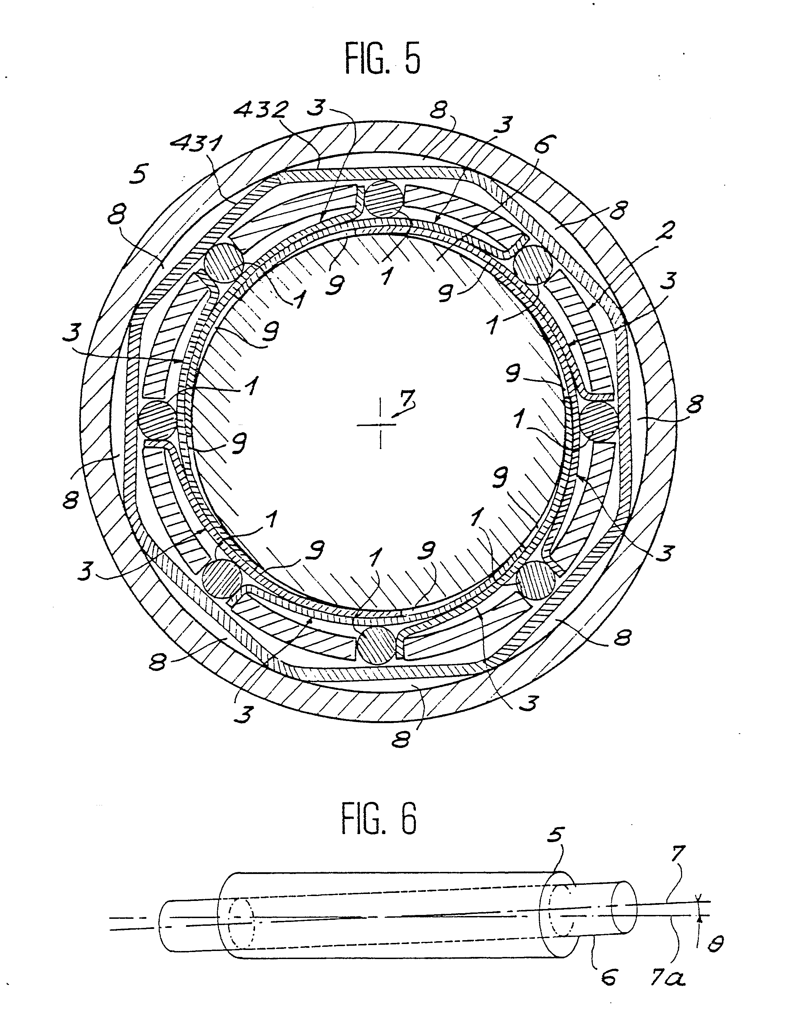

Sur la figure 5, on peut voir une variante de réalisation d'un palier selon la présente invention comportant un ressort unique 43 formant un polygone. Dans l'exemple illustré à la figure 5, nous disposons de huit feuilles 3, de huit éléments de transmission de force 1, les ressorts à lames 43 forment un hexagone. Avantageusement, chaque élément de transmission de force 1 est situé au milieu d'un côté de l'hexagone. Le dispositif de la figure 5 permet un assemblage facile. Il suffit par exemple de disposer les deux extrémités 431, 432 du ressort 43. De plus, l'étanchéité des chambres 8 est améliorée par l'utilisation des ressorts olygonaux. Dans une variante de réalisation non représentée, les extrémités 431 et 432 sont rendues étanches pour accroître l'amortissement fournie par les chambres 8 en assurant un isolement supplémentaire. Avantageusement, les extrémités des chambres 8 qu'on voit en coupe sur les figures 3, 4 et 5, comportent des moyens assurant leur étanchéité comme par exemple un joint.

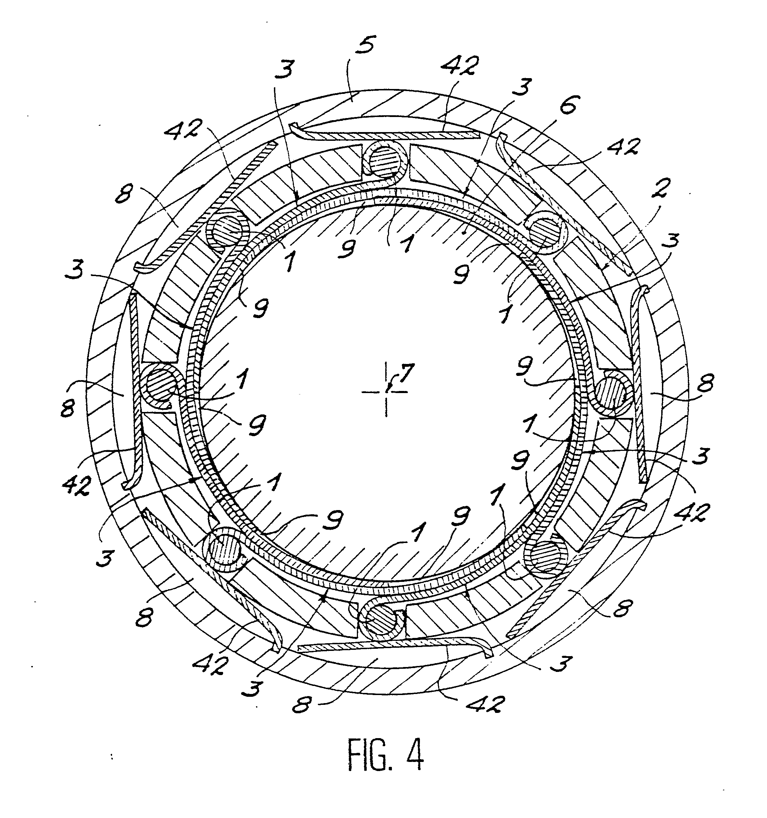

Dans l'exemple non limitatif illustré sur la figure 5, la fixation des extrémités des feuilles 3 est semblable à celle réalisée sur la figure 3. Par contre, l'exemple illustré sur la figure 4, on utilise des ressorts 42 sensiblement identiques aux ressorts 41 de la figure 3 ; mais les fixations des feuilles sont obtenues par un enroulement de leur extrémité autour des pièces de transmission de force 1.

Dans la plupart des cas, il est souhaitable que l'axe du fourreau 5 et l'axe de l'arbre 6 soient parallèles. Toutefois, il peut s'avérer utile comme illustré sur la figure 6 de permettre un débattement d'angle $\theta$ entre l'axe 7 de l'arbre 6 et l'axe 7a du fourreau 5. Ce débattement d'angle $\theta$ permet par exemple d'absorber des chocs dûs aux forces extérieures ou de permettre des tolérances de fabrication. Pour permettre un débattement d'angle $\theta$, on utilise par exemple le dispositif de la figure 2 dans lequel la rigidité des feuilles 3 n'est pas négligeable. Dans certains cas, si on veut augmenter l'angle $\theta$ on utilise une rigidité des feuilles 3 supérieure à celle fournie par le ressort 40. Les paliers permettant un débattement d'angle $\theta$ entre l'axe 7a du fourreau 5 et l'axe 7 de l'arbre 6, sans réduction notable de la capacité de charge du film fluide entre les feuilles 3 et l'arbre 6, sont complètement nouveaux et permettent aux paliers selon la présente invention des applications qui pour le moment étaient complètement interdites aux paliers à gaz.

L'invention a aussi pour objet un procédé de fabrication de paliers selon la présente invention. Ce procédé consiste à déterminer et à appliquer des contraintes nécessaires au bon fonctionnement du palier. La détermination des contraintes est déterminer par un calcul classique des mécaniques en fonction des caractéristiques désirées du palier. Le fait d'avoir totalement dissocier le réglage de la raideur du palier en phase de démarrage de celle d'une rotation à vitesse élevée permet de jouer de façon indépendant sur ces deux paramètres pour obtenir des paliers plus performants. Le palier selon la présente invention s'applique à tous les dispositifs utilisant des paliers classiques comme par exemple l'aéronef.

Dans la mesure où les feuilles 3 du palier ne subissent aucune contrainte au niveau de leur accrochage avant la formation du film de fluide l'usure est moindre à chaque démarrage. Après le démarrage, la mise en rotation de l'arbre 6 crée un film d'air hydro-dynamique qui modifie la position occupée par les feuilles 3 et entraîne une reprise de l'effort au niveau des éléments de transmission de force par les éléments de contrainte 4, comme par exemple les ressorts 40, 41, 42, 43. Il est possible ainsi de réaliser des paliers tout en ayant des précisions d'usinage inférieures à celles exigées par les paliers du type classique. Ces deux conditions permettent d'utiliser le palier selon la présente invention dans des nouvelles applications interdites aux paliers de type classique pour la transmission de mouvement, par exemple pour le remplacement de roulements à billes ou à cylindres notamment dans les véhicules, les dispositifs de transmission de mouvement, les générateurs électriques ou les machines tournantes. De même, la diminution des contraintes exercées au démarrage sur les feuilles 3 permet la formation du film fluide à la vitesse de rotation faible. Ceci permet de faire bénéficier les avantages de paliers à film fluide à des applications à basse vitesse interdites avec le palier du type classique. Les paliers, selon la présente invention, peuvent être adaptés à ces nouvelles applications, si cela s'avère nécessaire.

**Revendications**

1. Palier permettant la rotation relative d'un arbre et d'un fourreau comportant une pluralité de feuilles susceptibles d'engendrer un film fluide autour de l'arbre, caractérisé par le fait qu'une fixation libre des feuilles (3) permet leur mouvement pratiquement sans contrainte par rapport à l'arbre (6).

2. Palier selon la revendication 1, caractérisé par le fait qu'il comporte des moyens de contrainte (4) exerçant une force dirigée vers l'arbre (2) sur les feuilles (3).

3. Palier permettant la rotation relative d'un arbre et d'un fourreau comportant une pluralité de feuilles susceptibles d'engendrer un film fluide autour de l'arbre, caractérisé par le fait qu'il comporte des moyens de contrainte (4) participant à la rigidité du palier en exerçant des forces sur les feuilles (13) dirigées vers l'arbre (6), les feuilles (13) participant à la rigidité du palier par une force de rappel élastique dirigée vers l'arbre (6).

4. Palier selon la revendication 2 ou 3, caractérisé par le fait qu'il comporte des éléments (1) de transmission de force des moyens de contrainte (4) aux feuilles (3).

5. Palier selon la revendication 4, caractérisé par le fait que les éléments (1) de transmission de force ont une forme de révolution.

6. Palier selon l'une quelconque des revendications 2 à 5, caractérisé par le fait que les moyens de contrainte (4) sont des ressorts (40, 41, 42, 43).

7. Palier selon la revendication 6, caractérisé par le fait que les ressorts (40, 41, 42, 43) sont des ressorts à lames.

8. Palier selon la revendication 7, caractérisé par le fait qu'une première extrémité de chaque lame du ressort (40) est solidarisée avec le fourreau (5) et qu'une seconde extrémité de chaque lame du ressort (40) exerce une force dirigée vers l'arbre (6), sur une feuille (3).

9. Palier selon la revendication 7, caractérisé par le fait que chaque lame des ressorts (41, 42) prend appui, à ses extrémités, sur le fourreau et exerce une force dirigée vers l'arbre (6), sur les feuilles (3), sensiblement au milieu de chaque lame.

10. Palier selon la revendication 7, caractérisé par le fait que le ressort (43) a une forme polygonale.

11. Palier selon la revendication 10, caractérisé par le fait que le nombre de côtés du polygone formé par la lame du ressort (43) est égale au nombre de feuilles (3) du palier et que chaque côté de la lame du ressort (43) exerce une force dirigée vers l'arbre (6) sur les feuilles (3) sensiblement au milieu de chaque côté.

12. Palier selon la revendication 4, 5, 6, 7, 8, 9, 10 ou 11, caractérisé par le fait que les feuilles (3) entourent les éléments (1) de transmission de force.

13. Palier selon la revendication 4, 5, 6, 7, 8, 9, 10 ou 11, caractérisé par le fait que les feuilles (3) fixées par une de leurs extrémités au fourreau (5) à un fourreau support (2) solidaire du fourreau (5) et à une pièce de transmission de force (1).

14. Palier selon la revendication 2 et la revendication 8, caractérisé par le fait que chaque feuille (3) est solidarisée à une de ses extrémités avec le fourreau (5) au niveau de l'extrémité de la lame ressort (40).

15. Palier selon la revendication 2 ou 14, caractérisé par le fait que la force exercée par les moyens de contrainte (4) est plus faible en module que la force de rappel des feuilles (3) de façon à permettre à l'axe (9) de l'arbre (6) de former un angle θ non nul avec l'axe (9) du fourreau (5).

16. Palier selon la revendication 7, 8, 9, 10, 11, 12, 13, 14 ou 15, caractérisé par le fait que la lame du ressort (40, 41, 42, 43) forme une chambre (8) contenant un fluide compressible, le fluide jouant le rôle d'amortisseur lors des déplacements de la lame.

17. Palier selon la revendication 16, caractérisé par le fait que le même fluide forme un film autour de l'arbre (6) et permet l'amortissement des mouvements des lames de ressorts (41, 42, 43).

18. Procédé de fabrication de palier à film fluide, caractérisé par le fait qu'il comporte les étapes suivantes :
- fixation libre des feuilles (3),
- tarage des moyens de contraintes (4) d'après la capacité de charge désirée.

FIG. 1

FIG. 2

FIG. 3

FIG. 4

## FIG. 5

## FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 068 387 (SHIMADZU CORP.) * Pages 5-9; figures 2,5 * | 3,6-11 | F 16 C 32/00 F 16 C 17/12 |
| A | | 14-17 | |
| | --- | | |
| X | US-A-4 552 466 (E.L. WARREN) * En entier * | 1,2,3,6 ,7 | |
| A | | 10,14, 15 | |
| | --- | | |
| X | US-A-4 451 163 (J. GLASER) * En entier * | 1,2,3,6 ,7 | |
| A | | 4,12,14 | |
| | --- | | |
| X | US-A-3 366 427 (A. SILVER et al.) * En entier * | 1 | |
| A | | 2,3,6,7 ,16,17, 18 | |
| | --- | | |
| X | PATENT ABSTRACTS OF JAPAN, vol. 9, no. 25 (M-355)[1748], 2 février 1985; & JP-A-59 170 524 (HITACHI SEISAKUSHO K.K.) 26-09-1984 * Résumé * | 3,6,7 | DOMAINES TECHNIQUES RECHERCHES (Int. Cl.5) F 16 C |
| | --- | | |
| A | PATENT ABSTRACTS OF JAPAN, vol. 10, no. 62 (M-460)[2119], 12 mars 1986; & JP-A-60 208 627 (HITACHI SEISAKUSHO K.K.) 21-10-1985 | 1,2,3,4 ,6,18 | |
| | --- | | |
| A | US-A-4 502 795 (R.M. KLAASS et al.) --- -/- | | |

Le présent rapport a été établi pour toutes les revendications

| Lieu de la recherche | Date d'achèvement de la recherche | Examinateur |
|---|---|---|
| LA HAYE | 13-12-1989 | BEGUIN C.P. |

Office européen
des brevets

**RAPPORT DE RECHERCHE EUROPEENNE**

Numero de la demande

EP 89 20 2357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | US-A-4 795 274 (A.L. GU)<br>* En entier *<br>----- | 1-4,6,7<br>,9,18 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 13-12-1989 | BEGUIN C.P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P0402)